# EUROPEAN PATENT SPECIFICATION

(11) **EP 0 434 351 B1**
(45) Date of publication and mention of the grant of the patent: **08.03.1995**
(21) Application number: 90313806.3
(22) Date of filing: 18.12.1990
(51) Int. Cl.: H04N 1/32

(54) **Facsimile terminal equipment**
Faksimileendgerät
Dispositif terminal de fac-similé

(30) Priority: 18.12.1989 JP 326069/89
(43) Date of publication of application: 26.06.1991
(73) Proprietor: FUJITSU LIMITED, Kawasaki-shi, Kanagawa 211 (JP)
(72) Inventor: Yoneda, Noboru, B 202 Wisteria-Okurayama, Yokohama-shi, Kanagawa, 222 (JP)
(74) Representative: Fane, Christopher Robin King

(56) References cited:
- EP-A- 0 041 695
- US-A- 4 668 994
- PATENT ABSTRACTS OF JAPAN, vol. 12, no. 291 (E-644), 9th August 1988;& JP-A-63 067 857 (CANON INC.) 26-03-1988
- PATENT ABSTRACTS OF JAPAN, vol. 013, no. 581 (E-865), 21st December 1989;& JP-A-01 243 744 (TOSHIBA CORP.) 28-09-1989

## Description

The present invention relates to facsimile terminal equipment and, more particularly, to facsimile terminal equipment which rejects unnecessary communication.

Facsimile terminal equipment can receive image information from unspecified subscribers over public telephone lines. Some conventional facsimile terminal equipment can reject unnecessary communication to cope with prank transmission, one-sided transmission such as direct mail or wrong transmission from unspecified subscribers. In this case, subscribers who constitute a closed-area group are allocated ID numbers, and when image information is received, the ID number is checked to determine whether or not the information is from one of the group. If the ID number is valid, the image information is accepted. If not, the communication is rejected.

However, with the above system, one of the advantages of facsimile communication, that an image can be received from any unspecified subscriber, is removed.

There is disclosed in Patents Abstracts of Japan, Vol. 12, No. 291 (E-644), 9th August 1988, a data communication device arranged to reject calls from devices having telephone numbers which correspond to one of a plurality of numbers which have been previously stored in a rejection number memory by a user.

According to the present invention there is provided facsimile terminal equipment comprising facsimile communication control means for controlling facsimile communication, ID number detecting means for detecting an ID number of a transmitting facsimile terminal from a received signal, ID number memory means for storing a detected ID number, rejection number memory means for storing ID numbers to be rejected, and comparator means for permitting said facsimile communication control means to transmit a disconnect command to said transmitting facsimile terminal when the data stored in said ID number memory means corresponds to data stored in said rejection number memory means, characterised by history storage means for storing previously received ID numbers, and rejection number input means for selecting and inputting into the rejection number memory means an ID number from among ID numbers stored in said history storage means.

It will thus be apparent that embodiments of the present invention may provide facsimile terminal equipment which can reject unnecessary communication but which do not remove the ability to receive facsimile communication from subscribers in general whilst not necessarily requiring a user to enter by hand the digits of a number to be rejected.

For a better understanding of the invention and to show how the same may be carried into effect, reference will now be made, by way of example, to the accompanying drawings, wherein:
Figure 1 illustrates, in block form, an embodiment of the present invention;
Figure 2 is a more detailed block diagram of the embodiment of Figure 1;
Figure 3 is a flowchart illustrating the operation of the facsimile terminal equipment shown in Figure 2; and
Figure 4 illustrates transmission and reception of control signals by the facsimile terminal equipment shown in Figure 2.

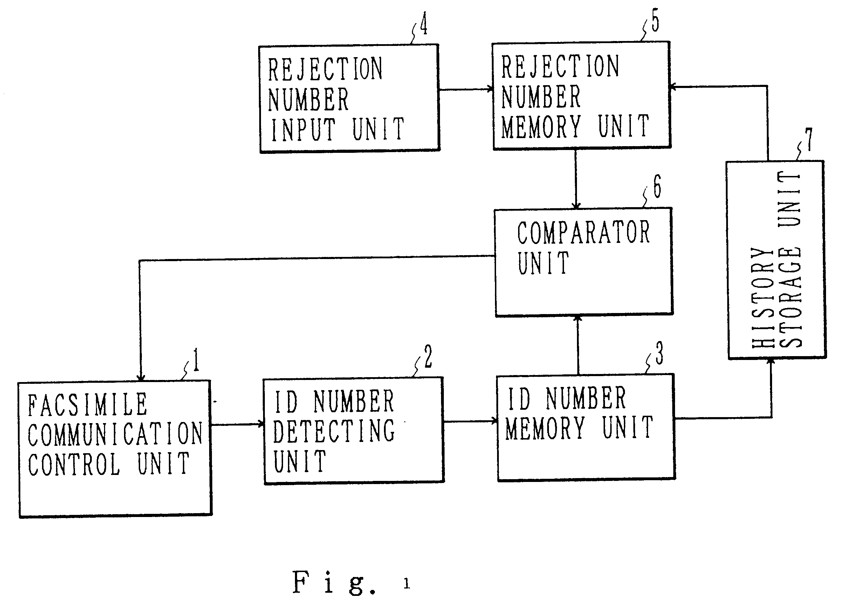

Facsimile terminal equipment according to an embodiment of the present invention will now be described with reference to Figure 1. It comprises a facsimile communication control unit 1 for performing communication control of the facsimile terminal equipment; an ID number detecting unit 2 for detecting an ID number of transmitting facsimile equipment from a received signal: an ID number memory unit 3 for storing the detected ID number: a history storage unit 7 for storing previously received ID numbers; a rejection number input unit 4 for selecting an ID number or numbers to be rejected from among ID numbers stored in the history storage unit; a rejection number memory unit 5 for storing selected ID numbers to be rejected; and a comparator unit 6 which permits the facsimile communication control unit 1 to transmit a disconnect command to the transmitting facsimile equipment when the data stored in the ID number memory unit 3 is included in, i.e. corresponds to, the data stored in the rejection number memory unit 5.

An ID number to be rejected can thus be selected from the past communication history stored in the history storage unit 7 for input easily and accurately into the rejection number memory unit.

The facsimile terminal equipment may be provided with a display unit for displaying the ID numbers stored in the history storage unit.

The rejection number input unit of the equipment may have not only the function of selecting an ID number to be rejected from among ID numbers stored in the history storage unit but also a function of inputting, i.e. by way of a keyboard of the unit, an arbitrary ID number to be stored in the rejection number memory unit 5.

The facsimile terminal equipment may thus be provided with display means for displaying the ID number input from the rejection number input unit.

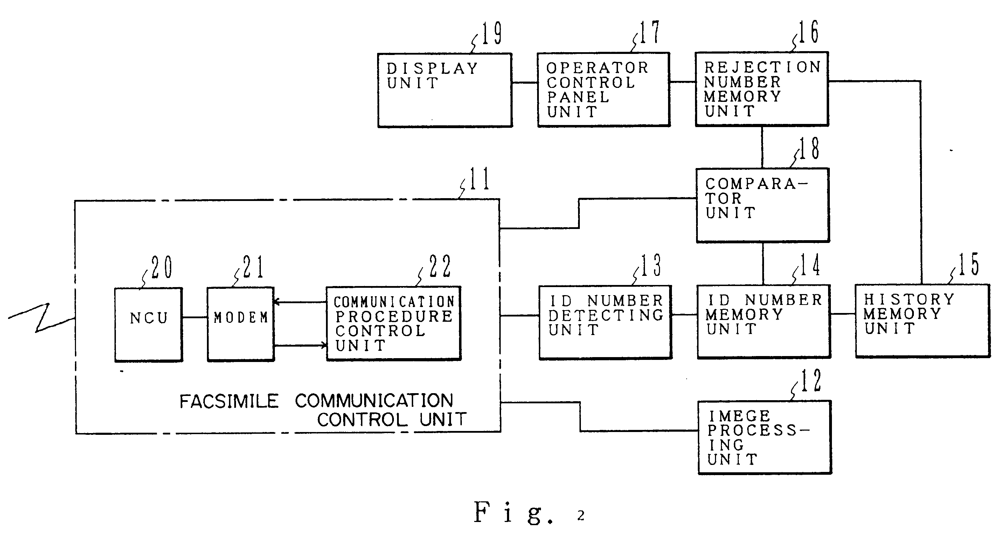

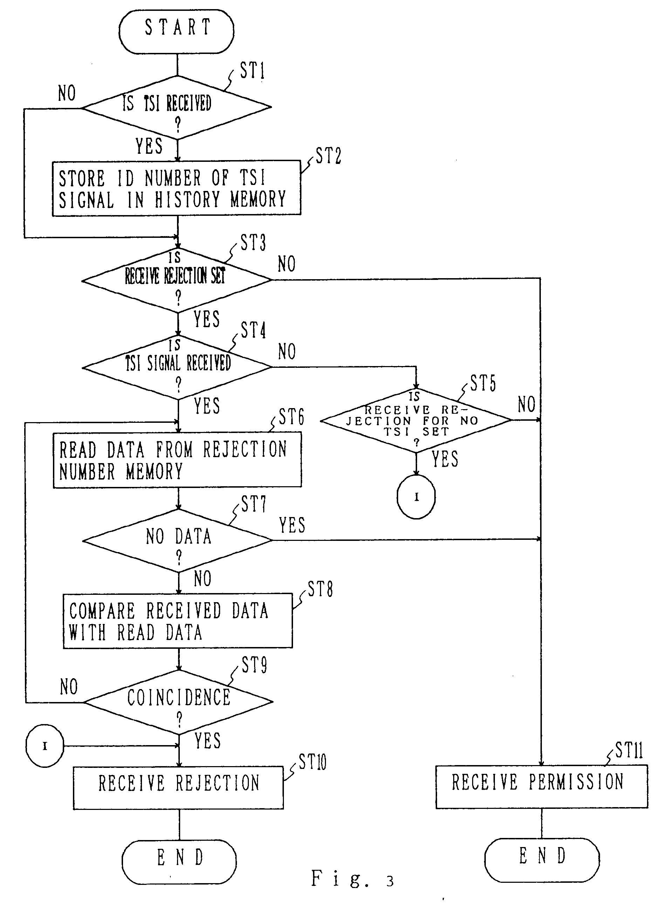

Figures 2 through 4 illustrate in more detail facsimile terminal equipment embodying the present invention. With reference to Figure 3, the equipment comprises a facsimile communication control unit 11 for performing communication control of the facsimile terminal equipment, an image processing unit 12 for decoding received image data and finally outputting the image in hard copy form, an ID number detecting unit 13 for detecting the ID number of a transmitting station from control signals transmitted by the transmitting station and received in an initial stage of facsimile communication, an ID number memory unit 14 for storing the ID number detected by the ID number detecting unit 13, a history memory unit 15 which serves as a history storage unit for storing a predetermined number of previously received ID numbers, and a rejection number memory unit 16 for storing ID numbers of subscribers to be rejected. There is also an operator control panel unit 17 which serves as a rejection number input unit for, in one mode, inputting a new, arbitrary, ID number to be rejected into the rejection number memory unit 16 and, in a second mode, selecting an ID number to be rejected from among previously rejected ID numbers stored in the history memory unit 15 for entry into the rejection number memory unit 16. A comparator unit 18 compares the ID number detected by the ID number detecting unit and stored in the ID number memory unit 14 with the ID numbers stored in the rejection number memory unit 16 and causes the facsimile control unit to transmit a disconnect command to the originating station when the ID number detected corresponds to one of the ID numbers stored in the rejection number memory unit.

There is a display unit 19 for displaying, in the first mode, a new rejection number to be added to the rejection number memory unit either when input through the operator control panel unit 17 or for displaying, in the second mode, the previously received ID numbers stored in the history memory unit 15 when an ID number to be rejected is to be selected from among those previously received ID numbers.

In the present embodiment, the comparator unit 18 is designed also to produce a disconnect command where no ID number is transmitted from a transmitting station.

As illustrated in Figure 2, the facsimile communication control unit 11 comprises a network control unit (NCU) 20, a modem 21 and a communication procedure control unit 22.

The operation of the present embodiment will now be described.

An ID number to be rejected can be entered into the rejection number memory unit 16 in either of the two modes. In the first mode, an operator may enter the ID number directly using the keyboard of the operator control panel unit 17 while watching the entered number on the display unit 19. In the second mode, the operator may instead select an ID number from the past history stored in the history memory unit 15, which number is visually displayed on the display unit. This selection is made through the operator control panel unit 17 and the selected number is entered into the memory unit 16.

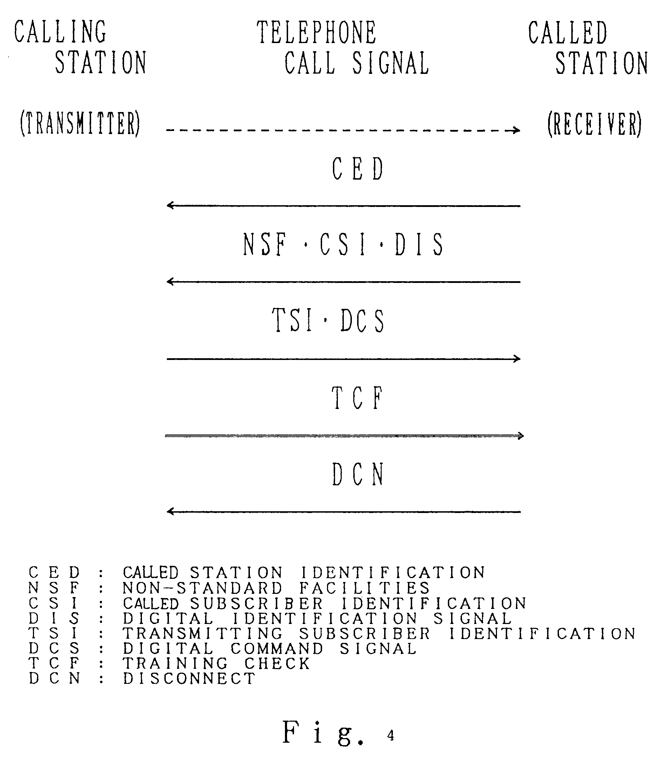

When a facsimile communication is received, transmission and reception of control signals are made in accordance with the procedure shown in Figure 4. This procedure conforms to that of the G3-standard facsimile system wherein, firstly, a called receiving station sends a CED signal (2100Hz ± 15Hz, for 2.6 seconds to 4.0 seconds) indicating that the terminal is a non-voice terminal. Subsequently the called station sends binary code procedure signals (NSF, CSI, DIS signals) in a synchronous mode of 300 bps. The NSF signal is an optional signal indicating non-standard receiver facilities which are out of the sphere of Recommendation T-series of the CCITT. The CSI signal is also an optional signal for giving the ID number of the receiving terminal in the form of an international telephone number, and the DIS signal is a signal indicating the standard receiver facilities prescribed by Recommendation T-series of the CCITT.

A G3-standard facsimile transmitter which has received the DIS signal transmits TSI, DCS signals in the 300-bps binary code procedure and subsequently transmits a TCF signal at a data rate specified by the DCS signal. Here the TSI signal is an optional signal to give the ID number of the transmitting termal in the form of an international telephone number, and the DCS signal is a receive command signal responding to the standard facilities of which it is informed by the DIS signal. The TCF signal is transmitted through a Recommendation T.4 modulation system. More specifically, the TCF signal is formed of a sequence of 0s and has a duration of 1.5 seconds ± 10 percent. The signal is designed to check training and determine whether or not communication is possible at the specified data rate.

On the other hand, the receiving terminal in which receive rejection is enabled compares the received TSI signal with the ID numbers stored in its rejection number memory unit 16 and, when a coincidence occurs, transmits a DCN signal in the form of a binary signal of 300 bps, thereby disconnecting communication. The DCN signal is a command signal indicating initiation of the phase E (calling disconnection).

The procedure of the facsimile terminal equipment will now be described with reference to the flowchart of Figure 3.

First, a decision is made as to whether or not the TSI signal containing an ID number has been received (ST1). If it has, the ID number is stored in the history memory unit 15 (ST2).

Subsequently, a decision is made as to whether or not receive rejection has been enabled or set in advance for a specific ID number or numbers (ST3). If it has not been enabled, a command to permit the reception of communication is issued (ST11) and reaches the procedure "END". If it has been enabled, a decision is made as to whether or not the TSI signal has been received (ST4).

Since a calling station is free to transmit the TSI signal or not, it is predetermined by initialization whether or not reception is to be rejected when no TSI signal is received. When the TSI signal has not been received in ST4, a decision is made as to whether or not receive rejection is to operate when no TSI signal is received has been enabled or set in advance (ST5). If it has not, a signal to permit the reception is produced (ST11). If it has, a signal to reject the reception is produced at this stage (ST10). In either case, the procedure is finished via the appropriate "END". The signal to reject reception is the DCN signal illustrated in Figure 5.

If, on the other hand, the TSI signal has been received, an ID number is detected from the TSI signal and then stored in the ID number memory unit 14. Subsequently, one piece of data (an ID number to be rejected) is read from the rejection number memory unit 16 (ST6). At this time a decision is made as to whether or not there is data left to be read in the rejection number memory unit 16 (ST7). If it is, that ID number to be rejected is compared with the received ID number stored in the ID number memory unit 14 (ST8) to decide whether or not a coincidence occurs therebetween (ST9).

If no coincidence occurs, new data is read from the rejection number memory unit 16 in ST6 and the comparison and decision steps are performed for the new data in ST8 and ST9. Such processes are performed repeatedly until a coincidence occurs or no data is left. When a coincidence occurs, a receive rejection signal is produced (ST10), thereby terminating the procedure. When there is no data left in the rejection number memory unit 16 before a data coincidence occurs, the command to permit reception is produced (ST11).

According to the present embodiment, therefore, facsimile communication from a transmitting station with a specific ID number can be disconnected. Moreover, an ID number to be rejected can be selected from past communication history stored in the history memory unit 15, thus permitting an ID number to be rejected to be entered easily and accurately into the rejection memory unit.

## Claims

1. Facsimile terminal equipment comprising facsimile communication control means (1) for controlling facsimile communication, ID number detecting means (2) for detecting an ID number of a transmitting facsimile terminal from a received signal, ID number memory means (3) for storing a detected ID number, rejection number memory means (5) for storing ID numbers to be rejected, and comparator means (6) for permitting said facsimile communication control means (1) to transmit a disconnect command to said transmitting facsimile terminal when the data stored in said ID number memory means.(3) corresponds to data stored in said rejection number memory means (5), the equipment being characterised by history storage means (7) for storing previously received ID numbers, and rejection number input means (4) for selecting and inputting into the rejection number memory means (5) an ID number from among ID numbers stored in said history storage means (7).

2. Facsimile terminal equipment according to claim 1, comprising display means (19) for displaying an ID number selected by said rejection number input means (4).

3. Facsimile terminal equipment according to claim 1 or 2, comprising display means (19) for displaying ID numbers stored in said history storage means (15).

4. Facsimile terminal equipment according to any one of the preceding claims wherein the rejection number input means (4) is operable by a user for inputting into the rejection number memory unit (5) arbitrary ID numbers.

5. Facsimile transmission equipment according to any one of the preceding claims wherein the control means (1) is arranged to transmit a disconnect command to the transmitting facsimile terminal when no ID number is detected by the ID detecting number means (2).

## Patentansprüche

1. Faksimileendstelleneinrichtung, umfassend ein Faksimileübertragungs-Steuermittel (1) zum Steuern einer Faksimileübertragung, ein ID-Nummererkennungsmittel (2) zum Erkennen einer ID-Nummer einer sendenden Faksimileendstelle aus einem empfangenen Signal, ein ID-Nummerspeichermittel (3) zum Speichern einer erkannten ID-Nummer, ein Ablehnungsnummern-Speichermittel (5) zum Speichern von abzulehnenden ID-Nummern und ein Komparatormittel (6), um dem Faksimileübertragungs-Steuermittel (1) zu erlauben, einen Abbruchbefehl an die sendende Faksimileendstelle zu senden, wenn die in dem ID-Nummerspeichermittel (3) gespeicherten Daten Daten entsprechen, die in dem Ablehnungsnummern-Speichermittel (5) gespeichert sind, wobei die Einrichtung gekennzeichnet ist durch ein Geschichtespeicherungsmittel (7) zum Speichern zuvor empfangener ID-Nummern und ein Ablehnungsnummer-Eingabemittel (4) zum Auswählen und Eingeben einer ID-Nummer von ID-Nummern, die in dem Geschichtespeicherungsmittel (7) gespeichert sind, in das Ablehnungsnummern-Speichermittel (5).

2. Faksimileendstelleneinrichtung nach Anspruch 1, umfassend ein Anzeigemittel (19) zum Anzeigen einer durch das Ablehnungsnummer-Eingabemittel (4) ausgewählten ID-Nummer.

3. Faksimileendstelleneinrichtung nach Anspruch 1 oder 2, umfassend ein Anzeigemittel (19) zum Anzeigen von in dem Geschichtespeicherungsmittel (15) gespeicherten ID-Nummern.

4. Faksimileendstelleneinrichtung nach einem der vorhergehenden Ansprüche, bei der das Ablehnungsnummer-Eingabemittel (4) von einem Benutzer zum Eingeben beliebiger ID-Nummer in die Ablehnungsnummern-Speichereinheit (5) bedienbar ist.

5. Faksimilesendeeinrichtung nach einem der vorhergehenden Ansprüche, bei der das Steuermittel (1) dazu eingerichtet ist, einen Abbruchbefehl an die sendende Faksimileendstelle zu senden, wenn keine ID-Nummer durch das ID-Nummererkennungsmittel (2) erkannt wird.

## Revendications

1. Equipement terminal de télécopieur comprenant : un moyen de commande de transmission par télécopieur (1) pour commander la transmission par télécopieur ; un moyen de détection de numéro d'identification (2) pour détecter, à partir d'un signal reçu, un numéro d'identification d'un terminal de télécopieur émetteur ; un moyen de mémorisation de numéro d'identification (3) pour mémoriser un numéro d'identification détecté ; un moyen de mémorisation de numéros à rejeter (5) pour mémoriser des numéros d'identification à rejeter ; et un moyen de comparaison (6) pour permettre audit moyen de commande de transmission par télécopieur (1) d'émettre une instruction de déconnexion vers ledit terminal de télécopieur émetteur lorsque la donnée mémorisée dans ledit moyen de mémorisation de numéro d'identification (3) correspond à une donnée mémorisée dans ledit moyen de mémorisation de numéros à rejeter (5), l'équipement étant caractérisé par un moyen de conservation d'historique (7) pour conserver des numéros d'identification reçus antérieurement, et par un moyen d'entrée de numéros à rejeter (4) pour sélectionner et pour entrer, dans le moyen de mémorisation de numéros à rejeter (5), un numéro d'identification parmi les numéros d'identification mémorisés dans ledit moyen de conservation d'historique (7).

2. Equipement terminal de télécopieur selon la revendication 1, comprenant un moyen d'affichage (19) pour afficher un numéro d'identification sélectionné par ledit moyen d'entrée de numéros à rejeter (4).

3. Equipement terminal de télécopieur selon la revendication 1 ou 2, comprenant un moyen d'affichage (19) pour afficher des numéros d'identification conservés dans ledit moyen de conservation d'historique (15).

4. Equipement terminal de télécopieur selon l'une quelconque des revendications précédentes, dans lequel le moyen d'entrée de numéros à rejeter (4) peut être mis en oeuvre par un utilisateur pour entrer des numéros d'identification arbitraires dans le module de mémorisation de numéros à rejeter (5).

5. Equipement terminal de télécopieur selon l'une quelconque des revendications précédentes, dans lequel le moyen de commande (1) est conçu pour émettre une instruction de déconnexion vers le terminal de télécopieur émetteur lorsque aucun numéro d'identification n'est détecté par le moyen de détection de numéro d'identification (2).
